# EUROPEAN PATENT SPECIFICATION

(11) **EP 3 319 495 B1**
(45) Date of publication and mention of the grant of the patent: **02.06.2021**
(21) Application number: 16736865.3
(22) Date of filing: 08.07.2016
(51) Int. Cl.: A47J 43/07

(54) **AN INSERT FOR A KITCHEN DEVICE**
EINSATZ FÜR EINE KÜCHENVORRICHTUNG
PIÈCE RAPPORTÉE POUR UN DISPOSITIF DE CUISINE

(30) Priority: 10.07.2015 SI 201500164
(43) Date of publication of application: 16.05.2018
(73) Proprietor: BSH Hausgeräte GmbH, 81739 München (DE)
(72) Inventor: JEGRISNIK, Uros, 3313 Polzela (SI); KOREN, Peter, 3331 Nazarje (SI); STERGAR, David, 3342 Gornji Grad (SI)
(86) International application number: PCT/EP2016/066238
(87) International publication number: WO 2017/009213

(56) References cited:
- EP-A2- 1 922 967
- WO-A1-2011/047642
- WO-A1-2013/131210
- FR-A1- 2 980 077

## Description

### BACKGROUND OF THE INVENTION

The present invention is relating to the field of operation and handling of the tools for processing food in kitchen devices.

### PRIOR ART

From the current state of the art, several inserts for processing vessels of motorized kitchen devices are known. Of specific interest to the presented invention are the inserts used as smoothie filters in blenders and similar kitchen devices. The objective of such an insert is to effectively divide the processing vessel into two compartments - an inner compartment where the food ingredients are added before or during processing, and an outer compartment where the resulting processed ingredients pass into through a filter or a mesh design of the insert. The inner compartment is fitted with a processing tool to effectuate the processing of the food when the kitchen device is set into operation. As the ingredients are processed into sufficiently small pieces or converted to juice, they are able to pass through the mesh to the outer compartment where the resulting ingredients, often referred to as a smoothie are collected ant later poured out of the processing vessel.

It is most desirable to have an insert as described above fixed into a stable position during operation of the kitchen device for safety reasons, as well as to prevent vibration (noise) and spilling of insufficiently processed ingredients into the outer compartment.

Several solutions to achieve safety and prevent spillage are known including locking mechanisms placed on the processing vessel and/or lid to fix the insert into appropriate position, some solutions also apply fixation of the insert through the positioning of the lid. These solutions, however, are mostly inefficient in regards to preventing vibration as the sealing is not sufficiently tight. As a solution for vibration, there are inserts known that apply fixation of the upper portion (near the lid) of the insert to the circumference of the processing bowl. To provide a vibration absorbing connection, the inserts in these solutions are fitted with an elastic component in the region of contact with the processing vessel. This component is attached to the insert, e.g. a rubber band or alternatively, the insert itself is produced using 2K design of the plastic part with rubber ribs.

The document EP 1 922 267 A2 discloses an insert to be fitted into a processing vessel as defined in the preamble of claim 1.

### OBJECT UNDERLYING THE INVENTION

The object underlying the present invention is to provide a simpler and more cost effective solution for fixation of an insert, such as a smoothie filter, into a processing vessel of a kitchen device.

### SOLUTION ACCORDING TO THE INVENTION

In order to achieve the object underlying the invention, the present invention provides an insert to be fitted into the processing vessel of a motorized kitchen device, such as a smoothie filter for a blender, as defined in claim 1. Further, the present invention provides a kitchen device accoding to claim 10.

Advantageous embodiments that can be implemented by themselves or in combination are described in dependent claims.

The solution according to the invention is achieved with/through an insert that is fixed into operating position within the processing vessel, without the need for a designated holding means positioned on the processing vessel, wherein the insert contacts the processing vessel in at least two general areas, the first contact area being in the region of the processing tool, such as a blade, and the second contact area in the region near the opposite end of the processing vessel, such as the circumference of the processing vessel near the lid area. The insert in its second contact area is made of a homogeneous flexible material and is designed to follow closely the inner contour of the processing vessel so as to engage the processing vessel when inserted in the axial direction with regard to the axis of rotation of the processing tool, resulting in fixation of the insert into operating position.

The above solution makes the insert more recyclable, easier and cheaper to produce. This has a positive effect on the processed ingredients contacting less different materials within the kitchen device while recycling of the product is more straightforward.

### EMBODIMENTS OF THE INVENTION

In a preferred embodiment, the positioning of the insert is independent of whether or not the lid is positioned onto the processing vessel. It is advantageous to the user if the lid need not be attached to the processing vessel in order to fix the insert and to perform some of the functions of the kitchen device, especially pouring out of the processed ingredients without the need to remove the insert.

In an advantageous solution, the insert is made entirely of a single homogeneous material, such as flexible plastic. Such a solution is advantageous regarding the ease of production, production costs as well as from the user cleaning and maintenance point of view.

Specifically, the contour of the processing vessel is inclined by between 0.1 and 5 degrees from the said axial direction, resulting in decreasing cross-section as the insert is being moved axially toward its fixed position. This feature is necessary to ensure that the diameter of the cross section is diminishing in the axial direction towards the processing tool of the kitchen device within the processing vessel, so as to provide an anchoring effect in the second contact when the insert is inserted in the said direction and fixed in the region of the processing tool, that is in the first contact area.

Preferably, the insert effectively divides the processing vessel of the kitchen device into an inner compartment where the processing tool is positioned, such as a blade, and an outer compartment. This allows for the main separation function of a smoothie filter or similar version of the insert, where unprocessed ingredients are inserted into the inner compartment (from the region of the lid), processed by the processing tool and then allowed to pass through the filtering feature of the insert into the outer compratment of the processing vessel, where they can be further processed or decanted.

Further, it is conceivable that the insert contains a mesh or similar setting that allows the processed ingredients to pass and/or filter from the inner compartment to the outer compartment when they have been processed sufficiently by the function of the kitchen device. In some arrangements, t is beneficial for the insert to comprise a filtering feature, as described in the previous paragraph. It may be in the form of a mesh fixed on the body of the insert in a way not to compromise structural stability, alternatively in the form of slits of the desired size, other solutions to a similar filtering effect are not limited with this description.

The preferred embodiment has the second contact area designed so that it has at least two, preferably four or more, distinct contact regions which deviate from following the inner contour of the processing vessel adjacent to the second contact area in a way, that it is in these distinct contact regions that the contact is made between the second contact area of the insert and the inner contour of the processing bowl. The fixing effect, which might be described as wedging, is based on the elasticity of the insert in the second contact area. As this part of the insert or the insert as a whole, depending on the embodiment, is made of a single homogeneous material, it is beneficial to provide additional elasticity by introducing several distinct contact regions which are designed to actually make contact with the contour of the processing vessel and are adapted to be more easily reversibly deformable as the rest of the second contact area, therefore providing more efficient fixation or wedging effect.

Preferably, the distinct contact regions each contain a weakening feature, such as a slit or similar, which allows distinct contact regions to be plastically deformed when they contact the inner contour of the processing vessel which results in a tight fit, fixation of the insert into appropriate position and prevents vibration. As described in the previous paragraph, the distinct contact region may be designed to be more easily deformable as the rest of the second contact area to provide a more efficient fixation and also absorb vibration. Introduction of slits is one mechanism to achieve that, but the invention should not be viewed as limited to the use of this mechanism.

Further, the distinct contact regions may be of different shapes, sizes, and have different weakening features, possibly resulting in varying forces needed for deformation. The requirement for different sizes of the distinct contact regions are somewhat determined by the generally circular or multigonal shape of the second contact area of the insert so as to follow the contour of the processing vessel. However, different shapes and sizes may be used to provide distinct contact regions with various firmnesses even within the same insert to provide for more efficient fixation within the processing bowl.

### BRIEF DESCRIPTION OF THE DRAWINGS

The invention is explained in more detail below on the basis of an exemplary embodiment and with reference to schematic drawings in which:
Fig. 1 shows a general view of the kitchen device
Fig. 2 shows the view on the insert from the top
Fig. 3 shows a perspective view of the insert with the emphasis on the second contact area

### DETAILED DESCRIPTION OF THE INVENTION

Advantageous embodiments and developments which can be used individually or in combination with one another are the subject matter of the dependent claims.

Features described in the claims and in the description can have relevance to the presented invention either by themselves or in any combination thereof.

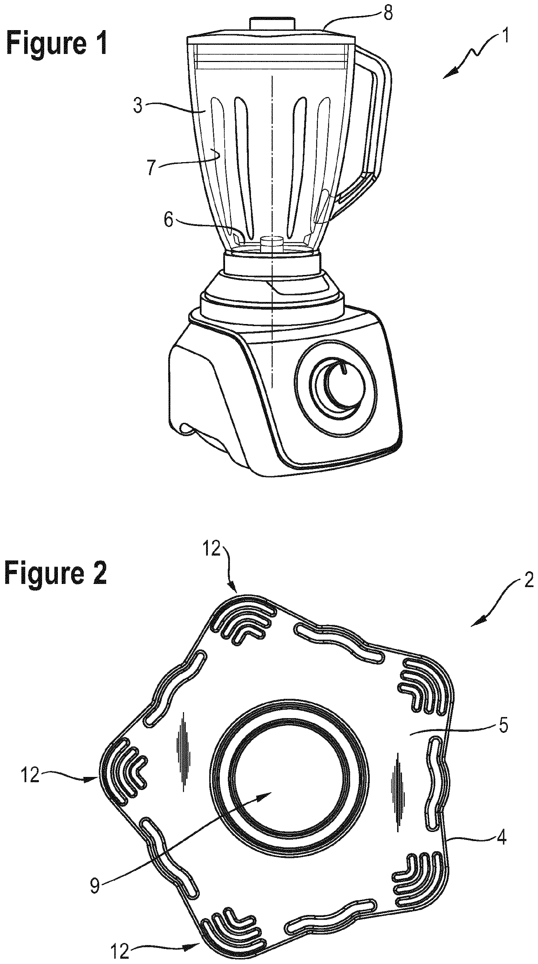

In Fig. 1, a general view of the kitchen device 1 such as a blender is shown. It comprises a base wherein the motor is positioned, which is connected to the processing tool 6. The processing tool 6, such as a blade, is generally positioned at the bottom of the processing vessel 3 as seen in the normal upright operating position. Additionally, the dashed line a depicts the axis of rotation of the processing tool 6 which is used throughout the description as a reference for various positions and movements of primarily the insert 2 described below. An axial movement and/or displacement according to this invention is to be understood as movement along this line a. Circumference 7 is shown which represent the inner contour of the processing vessel 3 in a plane perpendicular to the axis of rotation a, which comes into contact with the insert 2 in the second contact area 5 as described below. The shape of the circumference 7 is directly dependent on the design of the processing vessel 3 and may be circular or generally multigonal, while some solution also use the cloverleaf design. Further, the lid 8 is shown, which may be in contact or not with the insert 2 (not shown), depending on the design and desired functions of the insert 2 it may provide additional stability by fixing the insert 2 additionally at the top or, on the other hand, cause additional vibration and noise, which is generally not desired.

Fig. 2 depicts the top-down view of the insert 2. The insert is inserted into the processing vessel 3 through the lid 8 opening in the axial direction. It is, according to this embodiment, produced of a homogeneus plastic material in its entirety, while in other embodiments, it may be of a homogeneous plastic material only in the second contact area 5. In this embodiment, the second contact area 5 is a generally planar structure extending from the central tubular area comprising the first contact area 4 to the circumference 7 of the processing vessel 3. The processing vessel 3 is contacted by the second contact area 5 in the distinct contact regions 12. These regions come into contact with the circumference 7 of the processing vessel as the insert 2 is inserted in the axial direction a towards the processing tool 6. As the insert 2 is fixed in the first contact area 4 in the region of the processing tool 6, it is held and fixed in the upwards position according to the general operating position, through the contact of the second contact area 5 with the circumference 7 of the processing vessel 3. The insert 2, in its second contact area 5, is designed so as to closely follow the contour of the processing vessel 3. The contact is effectuated through the fact that the circumference 7 of the processing vessel 3 is steadily diminishing in the axial direction a towards the processing tool 6. To that effect, the inner walls are is inclined by between 0.1 and 5 degrees from the said axial direction, resulting in decreasing cross-section or circumference 7 of the processing vessel 3 as the insert 2 is being moved axially toward its fixed position.

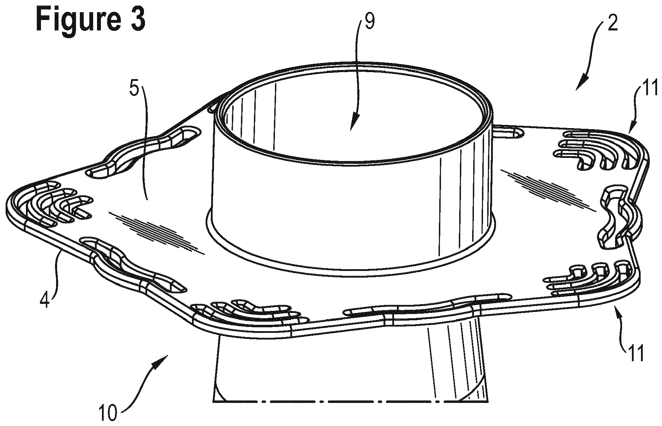

Finally, Fig. 3 shows a perspective view of the insert 2 where it is clearly discernible how the processing vessel 3 can be divided into two compartments (9, 10) through the insertion of the insert 2. The inner compartment 9 is formed in the area between the tubular form of the first contact area 4 and the processing tool 6 and the outer compartment 10 is formed between the tubular form of the first contact area 4 and the inner wall of the processing vessel 3. The second contact area is, in this embodiment, positioned so as to protrude from the tubular form of the first contact area 4 towards the inner wall of the processing vessel 3 and to provide support to fix the insert 2 in the operating upright position even when the lid 8 is not attached to the processing vessel 3. The second contact area 5 does not contact the circumference 7 of the processing vessel 3 in the entire length, but rather in at least two distinct contact regions 11. These distinct contact regions 11 are where the second contact area 5 must follow the contour of the processing vessel 3 most closely so as to produce the best possible fit. However, it is important to note, that for a fit that makes the fixation the most effective in the sense of safety (preventing unwanted removal during operation) and prevention of vibration to reduce sound, said distinct contact regions 11 should exhibit reversible plasticity. This ensures that when the insert 2 is inserted in the axial direction a and fixed in the first contact area 4 in the region of the processing tool 6, the distinct contact regions 12 are sufficiently squeeze and plastically deformed by the diminishing circumference 7 of the processing vessel 3 as described above, to produce sufficient forces to fix the insert 2 in the desired position. To assist this effect in the setting where the whole of at least the second contact area 5 is made of a homogeneous material, such as plastic, weakening features 12 may be introduced. These features may be in various shapes and sizes, possibly even providing distinct contact regions 11 within the same insert 2 exhibiting varying elasticity. In the presented embodiment, the weakening features 12 are in the form of elongated slits following the contour of the inner wall of the processing vessel 3 in the distinct contact regions 11 and may be provided a single slits or as slits in several rows as shown in Figure 3.

### Feature list

- 1: kitchen device
- 2: insert
- 3: processing vessel
- 4: first contact area
- 5: second contact area
- 6: processing tool
- 7: circumference of the processing vessel
- 8: lid
- 9: inner compartment
- 10: outer compartment
- 11: distinct contact regions (in the second contact area)
- 12: weakening feature

## Claims

1. An insert (2) to be fitted into the processing vessel (3) of a motorized kitchen device (1), such as a smoothie filter for a blender, that is fixed into operating position within the processing vessel (3), without the need for a designated holding means positioned on the processing vessel, wherein the insert (2) contacts the processing vessel (3) in at least two general areas, the first contact area (4) being in the region of the processing tool (6), such as a blade, and the second contact area (5) in the region near the opposite end of the processing vessel (3), such as the circumference (7) of the processing vessel (3) near the lid (8) area, **characterized in that** the insert (2) in its second contact area (5) is made of a homogeneous flexible material and is designed to follow closely the inner contour of the processing vessel (3) so as to engage the processing vessel (3) when inserted in the axial direction with regard to the axis of rotation of the processing tool (6), resulting in fixation of the insert (2) into operating position.

2. The insert (2) according to claim 1, **characterized in that** the positioning of the insert (2) is independent of whether or not the lid (8) is positioned onto the processing vessel (3).

3. The insert (2) according to claims 1 or 2, **characterized in that** the insert (2) is made entirely of a single homogeneous material, such as flexible plastic.

4. The insert (2) according to any of the previous claims, **characterized in that** the contour of the processing vessel (3) is inclined by between 0.1 and 5 degrees from the said axial direction, resulting in decreasing cross-section as the insert (2) is being moved axially toward its fixed position.

5. The insert (2) according to any of the previous claims, **characterized in that** the insert (2) effectively divides the processing vessel (3) of the kitchen device (1) into an inner compartment (9) where the processing tool (6) is positioned, such as a blade, and an outer compartment (10).

6. The insert (2) according to any of the previous claims, **characterized in that** the insert (2) contains a mesh or similar setting that allows the processed ingredients to pass and/or filter from the inner compartment (9) to the outer compartment (10) when they have been processed sufficiently by the function of the kitchen device (1).

7. The insert (2) according to any of the previous claims, **characterized in that** the second contact area (5) is designed so that it has at least two, preferably four or more, distinct contact regions (11) which deviate from following the inner contour of the processing vessel (3) adjacent to the second contact area (5) in a way, that it is in these distinct contact regions (11) that the contact is made between the second contact area (5) of the insert (2) and the inner contour of the processing bowl (3).

8. The insert (2) according to claim 7, **characterized in that** distinct contact regions (11) each contain a weakening feature (12), such as a slit or similar, which allows distinct contact regions (11) to be plastically deformed when they contact the inner contour of the processing vessel (3) which results in a tight fit, fixation of the insert (2) into appropriate position and prevents vibration.

9. The insert (2) according to claims 6 or 7, **characterized in that** distinct contact regions (11) may be of different shapes, sizes, and have different weakening features (12), possibly resulting in varying forces needed for deformation.

10. A kitchen device (1) comprising an insert (2) according to claims 1 to 9.

## Patentansprüche

1. Einsatz (2), der sich in den Verarbeitungsbehälter (3) eines motorisierten Küchengeräts (1) einsetzen lässt, wie ein Smoothie-Filter für einen Mixer, der ohne ein an dem Verarbeitungsbehälter angeordnetes spezielles Haltemittel in Arbeitsposition in dem Verarbeitungsbehälter (3) fixiert ist, wobei sich der Einsatz (2) in mindestens zwei allgemeinen Bereichen mit dem Verarbeitungsbehälter (3) in Kontakt befindet, wobei der erste Kontaktbereich (4) in der Region des Verarbeitungswerkzeugs (6), beispielsweise einer Klinge, und der zweite Kontaktbereich (5) in der Region in der Nähe des gegenüberliegenden Endes des Verarbeitungsbehälters (3), beispielsweise des Umfangs (7) des Verarbeitungsbehälters (3) in der Nähe des Bereichs des Deckels (8), liegt, **dadurch gekennzeichnet, dass** der Einsatz (2) in seinem zweiten Kontaktbereich (5) aus einem homogenen, flexiblen Material hergestellt und so ausgelegt ist, dass er genau der Innenkontur des Verarbeitungsbehälters (3) entspricht und so beim Einführen in axialer Richtung in Bezug auf die Rotationsachse des Verarbeitungswerkzeugs (6) eng am Verarbeitungsbehälter (3) anliegt, wodurch der Einsatz (2) in der Arbeitsposition fixiert wird.

2. Einsatz (2) nach Anspruch 1, **dadurch gekennzeichnet, dass** die Anordnung des Einsatzes (2) unabhängig davon ist, ob der Deckel (8) auf dem Verarbeitungsbehälter (3) angeordnet ist.

3. Einsatz (2) nach Anspruch 1 oder 2, **dadurch gekennzeichnet, dass** der Einsatz (2) komplett aus einem einzigen homogenen Material wie flexiblem Kunststoff besteht.

4. Einsatz (2) nach einem der vorhergehenden Ansprüche, **dadurch gekennzeichnet, dass** die Kontur des Verarbeitungsbehälters (3) um 0,1 bis 5 Grad zur axialen Richtung geneigt ist, wodurch sich der Querschnitt verringert, wenn der Einsatz (2) axial in seine Fixierposition bewegt wird.

5. Einsatz (2) nach einem der vorhergehenden Ansprüche, **dadurch gekennzeichnet, dass** der Einsatz (2) den Verarbeitungsbehälter (3) des Küchengeräts (1) gewissermaßen in einen Innenraum (9), in dem das Verarbeitungswerkzeug (6), wie eine Klinge, angeordnet ist, und einen Außenraum (10) unterteilt.

6. Einsatz (2) nach einem der vorhergehenden Ansprüche, **dadurch gekennzeichnet, dass** der Einsatz (2) ein Sieb oder eine ähnliche Einrichtung enthält, das/die es ermöglicht, dass die verarbeiteten Zutaten aus dem Innenraum (9) in den Außenraum (10) gelangen und/oder gefiltert werden, wenn sie mithilfe des Küchengeräts (1) ausreichend verarbeitet worden sind.

7. Einsatz (2) nach einem der vorhergehenden Ansprüche, **dadurch gekennzeichnet, dass** der zweite Kontaktbereich (5) so ausgelegt ist, dass er mindestens zwei, vorzugsweise vier oder mehr unterschiedliche Kontaktregionen (11) aufweist, die auf eine Weise von der Innenkontur des Verarbeitungsbehälters (3) neben dem zweiten Kontaktbereich (5) abweichen, dass es in eben diesen unterschiedlichen Kontaktregionen (11) zwischen dem zweiten Kontaktbereich (5) des Einsatzes (2) und der Innenkontur der Verarbeitungsschüssel (3) zum Kontakt kommt.

8. Einsatz (2) nach Anspruch 7, **dadurch gekennzeichnet, dass** unterschiedliche Kontaktregionen (11) jeweils ein Schwächungsmerkmal (12) wie einen Schlitz oder Ähnliches enthalten, wodurch sich unterschiedliche Kontaktregionen (11) plastisch verformen lassen, wenn sie mit der Innenkontur des Verarbeitungsbehälters (3) in Kontakt kommen, wodurch es zu einer Festsitz-Fixierung des Einsatzes (2) in der entsprechenden Position kommt und Vibrationen verhindert werden.

9. Einsatz (2) nach Anspruch 6 oder 7, **dadurch gekennzeichnet, dass** unterschiedliche Kontaktregionen (11) verschiedene Formen, Größen und unterschiedliche Schwächungsmerkmale (12) aufweisen können, was möglicherweise unterschiedliche für die Verformung benötigte Kräfte zur Folge hat.

10. Küchengerät (1) mit einem Einsatz (2) nach Anspruch 1 bis 9.

## Revendications

1. Pièce rapportée (2) destinée à être montée dans le récipient de transformation (3) d'un dispositif de cuisine (1) motorisé, tel qu'un filtre à smoothie pour un mixeur, qui est fixée en position de fonctionnement dans le récipient de transformation (3), sans qu'un moyen de retenue désigné positionné dans le récipient de transformation ne soit nécessaire, la pièce rapportée (2) étant en contact avec le récipient de transformation (3) dans au moins deux secteurs généraux, le premier secteur de contact (4) étant dans la zone de l'outil de transformation (6), tel qu'une lame, et le second secteur de contact (5) dans la zone située près de l'extrémité opposée du récipient de transformation (3), telle que la circonférence (7) du récipient de transformation (3) près du secteur du couvercle (8), **caractérisée en ce que** la pièce rapportée (2), dans son second secteur de contact (5), est constituée d'un matériau flexible homogène et est conçue pour suivre étroitement le contour intérieur du récipient de transformation (3) de façon à venir en contact avec le récipient de transformation (3) quand elle est insérée dans la direction axiale par rapport à l'axe de rotation de l'outil de transformation (6), ce qui résulte en la fixation de la pièce rapportée (2) en position de fonctionnement.

2. Pièce rapportée (2) selon la revendication 1, **caractérisée en ce que** le positionnement de la pièce rapportée (2) est indépendant du positionnement ou non du couvercle (8) sur le récipient de transformation (3).

3. Pièce rapportée (2) selon les revendications 1 ou 2, **caractérisée en ce que** la pièce rapportée (2) est entièrement constituée d'un unique matériau homogène, tel que du plastique flexible.

4. Pièce rapportée (2) selon l'une quelconque des revendications précédentes, **caractérisée en ce que** le contour du récipient de transformation (3) est incliné de 0,1 à 5 degrés depuis ladite direction axiale, ce qui résulte en une section transversale décroissante lorsque la pièce rapportée (2) est déplacée axialement vers sa position fixée.

5. Pièce rapportée (2) selon l'une quelconque des revendications précédentes, **caractérisée en ce que** la pièce rapportée (2) divise efficacement le récipient de transformation (3) du dispositif de cuisine (1) en un compartiment intérieur (9) dans lequel l'outil de transformation (6) est positionné, tel qu'une lame, et un compartiment extérieur (10).

6. Pièce rapportée (2) selon l'une quelconque des revendications précédentes, **caractérisée en ce que** la pièce rapportée (2) contient un maillage ou un arrangement similaire qui permet aux ingrédients transformés de passer et/ou d'être filtrés du compartiment intérieur (9) au compartiment extérieur (10) quand ils ont été suffisamment transformés par la fonction du dispositif de cuisine (1).

7. Pièce rapportée (2) selon l'une quelconque des revendications précédentes, **caractérisée en ce que** le second secteur de contact (5) est conçu de façon à avoir au moins deux, de préférence quatre ou plus, zones de contact (11) distinctes qui ne suivent pas le contour intérieur du récipient de transformation (3) adjacent au second secteur de contact (5) de telle manière que c'est dans ces zones de contact (11) distinctes que le contact est fait entre le second secteur de contact (5) de la pièce rapportée (2) et le contour intérieur du bol de transformation (3).

8. Pièce rapportée (2) selon la revendication 7, **caractérisée en ce que** les zones de contact (11) distinctes contiennent chacune une caractéristique d'affaiblissement (12), telle qu'une fente ou similaire, qui permet aux zones de contact (11) distinctes de subir une déformation plastique quand elles sont en contact avec le contour intérieur du récipient de transformation (3), ce qui résulte en une fixation bien ajustée de la pièce rapportée (2) dans une position appropriée et empêche les vibrations.

9. Pièce rapportée (2) selon les revendications 6 ou 7, **caractérisée en ce que** les zones de contact (11) distinctes peuvent être de différentes formes, tailles et avoir différentes caractéristiques d'affaiblissement (12), ce qui peut résulter en des forces variables nécessaires pour la déformation.

10. Dispositif de cuisine (1) comprenant une pièce rapportée (2) selon les revendications 1 à 9.
